**Europäisches Patentamt**

**European Patent Office**

**Office européen des brevets**

(11) Publication number : **0 480 604 A1**

# (12) EUROPEAN PATENT APPLICATION

(21) Application number : **91308858.9**

(22) Date of filing : **27.09.91**

(51) Int. Cl.$^5$: **B23Q 11/00, A61C 17/00**

(30) Priority : **06.10.90 GB 9021774**

(43) Date of publication of application :
**15.04.92 Bulletin 92/16**

(84) Designated Contracting States :
**CH DE ES FR IT LI SE**

(71) Applicant : **CLARKE AUTOMATION LIMITED**
**Windsor House, Brunswick Road**
**Gloucester (GB)**

(72) Inventor : **Clarke, Douglas Cecil**
**54 Marling Crescent, Paganhill**
**Stroud, Gloucestershire, GL5 4LB (GB)**

(74) Representative : **Higgins, Michael Roger et al**
**A.R. Davies & Co. 27, Imperial Square**
**Cheltenham Glos. GL50 1RQ (GB)**

(54) **Suction devices.**

(57) A suction device has a suction opening 14, a fluid inlet 17, a fluid outlet 21, a suction passage 20 between the suction opening and the outlet, and a restricted passage 19 connecting the inlet to the suction passage intermediate the suction opening and the outlet. The restricted passage is arranged so that fluid flowing therefrom is directed towards the outlet to create a depression in the suction passage to provide suction at the suction opening. The device also comprises a control element 13 for selectively closing off the suction passage from the outlet so as to create a jet of fluid through the suction opening as an alternative to providing suction at the suction opening.

FIG 1

This invention relates to suction devices.

Almost all machining operations, whether it be a dentist drilling or a piece of metal being cut on a lathe, result in swarf which becomes scattered over the machine area and must be cleared away. The common solution is to provide the operator with compressed air or blow guns which enable the swarf to be blown off the machine or out of the tooled part on to the surrounding floor. However, this can be dangerous as fine slivers of metal fly up into the air and can become lodged in people's eyes.

The disposal of other types of waste is also often problematic. For example, with the normal design of suction pump very great care has to be taken if the device is to be used with sharp waste or dirty waste such as sump oil.

The invention seeks to provide a suction device which provides a convenient means for removing or disposing of swarf, dust, fluff or other waste material, which is reliable in operation and inexpensive to make, and which can be used to blow material away in traditional manner, if so desired.

According to the present invention, there is provided a suction device having a suction opening, a fluid inlet for connection to a source of fluid under pressure, a fluid outlet, a suction passage between the suction opening and the outlet, a restricted passage connecting the inlet to the suction passage intermediate the suction opening and the outlet and arranged so that in use fluid flowing from the restricted passage is directed towards the outlet to create a depression in the suction passage to provide suction at the suction opening, and selection means for closing-off or substantially closing-off the suction passage from the outlet so as in use to create a jet of fluid through the suction opening as an alternative to providing suction at the suction opening.

Preferably, the restricted passage surrounds the suction passage and, in this case, the restricted passage may have a first part extending co-axially with the suction passage and a second part which converges on the suction passage in a direction away from the suction opening.

Advantageously, the device includes a body and the selection means comprises a control element angularly movable in the body to connect and disconnect (or substantially disconnect) the suction passage and the outlet. In this case, the restricted passage may be defined by the body and the control element and the control element may be shaped such that angular movement of the control element does not affect the restricted passage.

Preferably, a bleed passage is provided between the suction passage and the outlet when the selection means is in its substantially closed-off position.

Conveniently, the suction device may also comprise a valve for controlling the flow of fluid between the inlet ad the suction passage.

Conveniently, the device has a gun-shaped body having a barrel section and a handle, the suction passage being formed in the barrel section and the outlet being provided in the handle.

The invention will now be more particularly described, by way of example, with reference to the accompanying drawings, in which;

Figure 1 is a sectional view of one embodiment of a suction device according to the present invention, in a suction mode,

Figure 2 is an end view of the device of the Figure 1,

Figure 3 is a view similar to Figure 1 but showing the device in a blow mode, and

Figure 4 is an end view of the device shown in Figure 3.

Referring to the drawings, the suction device shown therein is generally indicated at 10 and comprises a gun-shaped body 11, a valve 12 and a control element 13 which is rotatably mounted in the body 11. The body 11 defines a suction opening or nozzle 14 which opens into a chamber 15 for receiving the control element 13.

The body 11 and control element 13 together define a compressed air path 16 which comprises an air inlet 17, control valve 12, a restricted passage 19, a suction passage 20 and an outlet 21. The restricted passage 19 is formed by an annular cut-out on the outer surface of the generally cylindrical control element 13 and debouches into the suction passage 20 by means of a rearwardly facing inclined annular outlet 22.

The control element is further formed with a bleed passage 23 which extends at right angles to the downstream end of the suction passage 20. The control element is sealed with the body be means of 0-rings 24 and is held in the body by a screw-threaded retaining device 25. A handle 26, formed integrally with the control element 13, projects through the retaining device 25 to enable rotation of the control element.

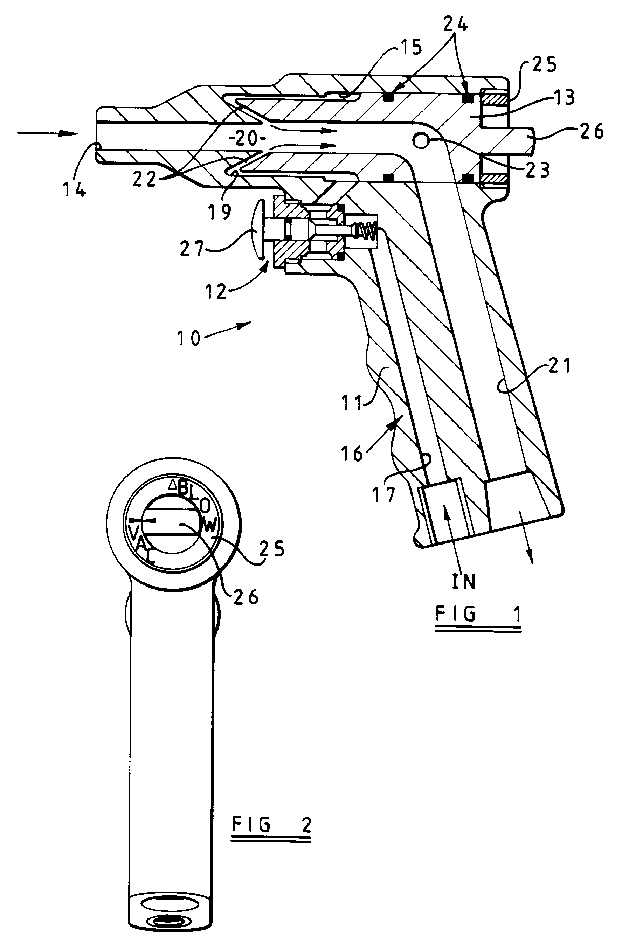

In Figure 1 the device is shown in a suction mode and operates in the following manner. When a knob 27 of the control valve 12 is depressed compressed air flows from a source (not shown) through the air inlet 17 into the restricted passage 19. As the pressure of the air is maintained substantially constant the air speed in the passage 19 is very considerably increased with the result that the passage of the fast moving air into the broad suction passage 20 creates a depression within the suction passage 20 and hence a suction at the opening 14.

Thus the operator can suck up swarf, dust, fluff or other waste material, by passing the suction opening 14 over the surface to be cleaned and depressing the valve knob 27. Material drawn into the opening by the depression in the suction passage 20 gets caught in the fluid stream and passes rapidly out of the outlet 21.

Dependent on the type of waste being collected the outlet 21 can be connected to a variety of reservoirs which will filter the waste from the airstream. Indeed the connection between the outlet 21 and the reservoir (not shown) may itself be porous to enhance the filtering effect.

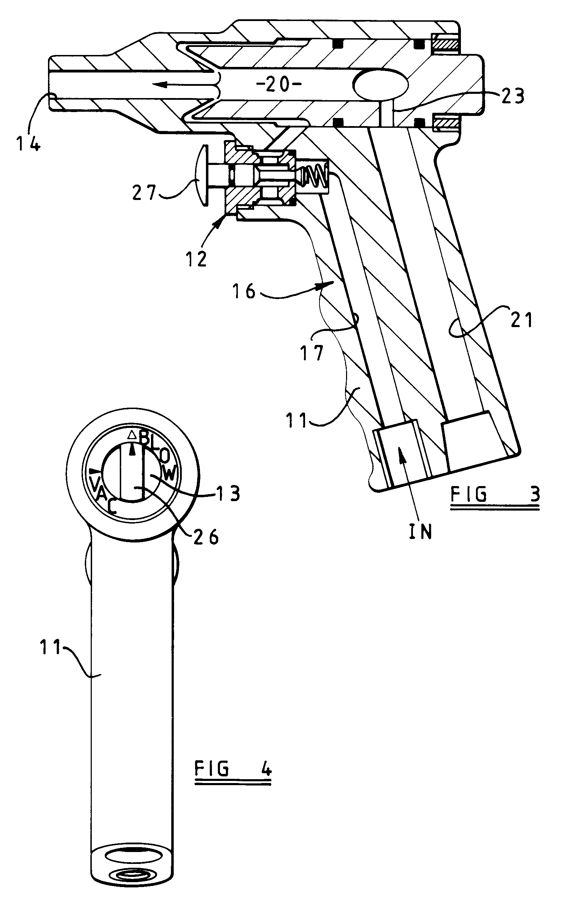

If it is desired to blow the waste material away, in the traditional manner, then the control element 13 is rotated, by means of its handle 26, through 90° so that it is in the position shown in Figures 3 and 4. In this position the suction passage 20 is substantially closed off from the outlet 21 with the result that the air strikes the closed end of the suction passage and is deflected through the opening 14. The suction passage 20 is still connected to the outlet 21 by means of the bleed passage 23 so that in the event of the opening 14 becoming blocked the air will pass out through the outlet. This makes the device much safer in its blow mode because it means that if the jet comes into contact with an operator's hands or other part of his/her body the pressure of the jet drops rapidly.

It will be seen that there are no moving operational parts in the device; the only elements which move are the control element and the valve knob. This means that the device can readily handle either sharp or dirty waste because there are no expensive items such as motors or pumps which can become damaged.

The opening or nozzle 14 may be internally or externally threaded to receive either jet defining devices or suction tools. For example, if it is desired to clean out a machine bore or a sump tank a flexible tube can be connected to the opening 14 with the result that the suction can be located at points far out of the operator's reach.

In addition the device can be turned into a handling or lifting device by attaching a suction cup to surround the opening. This would be particularly useful for lifting sheet metal on to a machine for machining and can form a lifting device for a robot arm. If the device is to be operated automatically, then the valve 12 can be dispensed with and the device merely controlled by pulsed compressed air.

It will be appreciated that water or other fluid could be readily used to create the suction instead of compressed air and this may be particularly useful where water cleaning of dirty tanks, such as oil tanks, takes place, as the tank can be initially hosed down using the "blow mode" and the dirty water can then be sucked up in the suction mode.

## Claims

1. A suction device having a suction opening (14), a fluid inlet (17) for connection to a source of fluid under pressure, a fluid outlet (21), a suction passage (20) between the suction opening and the outlet, a restricted passage (19) connecting the inlet to the suction passage intermediate the suction opening and the outlet and arranged so that in use fluid flowing from the restricted passage is directed towards the outlet to create a depression in the suction passage to provide suction at the suction opening, and selection means (13) for closing-off or substantially closing-off the suction passage from the outlet so as in use to create a jet of fluid through the suction opening as an alternative to providing suction at the suction opening.

2. A suction device as claimed in claim 1, wherein the restricted passage (19) surrounds the suction passage (20).

3. A suction device as claimed in claim 2, wherein the restricted passage (19) has a first part extending co-axially with the suction passage (20) and a second part which converges on the suction passage (20) in a direction away from the suction opening (14).

4. A suction device as claimed in any one of claims 1 to 3, wherein the device includes a body (11) and the selection means comprises a control element (13) angularly movable in the body to connect and disconnect the suction passage (20) and the outlet (21).

5. A suction device as claimed in claim 4, wherein the restricted passage (19) is defined by the body (11) and the control element (13).

6. A suction device as claimed in claim 5, wherein the control element (13) is shaped such that angular movement of the control element does not affect the restricted passage (19).

7. A suction device as claimed in any one of the preceding claims, wherein a bleed passage (23) is provided between the suction passage (20) and the outlet (21) when the selection means (13) is in its substantially closed-off position.

8. A suction device as claimed in any one of the preceding claims, further comprising a valve (12) for controlling the flow of fluid between the inlet (17) and the suction passage (20).

9. A suction device as claimed in any one of the preceding claims, having a gun-shaped body (11) having a barrel section and a handle, the suction passage (20) being formed in the barrel section and the outlet (21) being provided in the handle.

FIG 1

FIG 2

4

FIG 3

FIG 4

**European Patent Office**

# EUROPEAN SEARCH REPORT

Application Number

EP 91 30 8858

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>Y | EP-A-0 126 793 (TBT)<br><br>* claim 1; figure 1 * | 1,4<br>2,3,8 | B23Q11/00<br>A61C17/00 |
| Y | JP-A-58 056 749 (YAMAZAKI)<br>* figure 1 * | 2,3 | |
| Y<br>A | DE-C-908 331 (LIERHAUS)<br><br>* figure 2 * | 8<br>9 | |
| A | JP-A-62 228 349 (SEIBU)<br>* figure 1 * | 7 | |

TECHNICAL FIELDS SEARCHED (Int. Cl.5)

B23Q
A61C

The present search report has been drawn up for all claims

| Place of search | Date of completion of the search | Examiner |
|---|---|---|
| THE HAGUE | 17 JANUARY 1992 | DE GUSSEM J.L. |